# FASCICULE DE BREVET EUROPEEN

(11) **EP 0 505 271 B1**
(45) Date de publication et mention de la délivrance du brevet: **26.04.1995**
(21) Numéro de dépôt: 92400720.6
(22) Date de dépôt: 18.03.1992
(51) Int. Cl.: B29C 39/08, B29C 31/04, B29C 39/24

(54) **Procédé pour noyer dans de la résine l'intérieur d'un appareil électrique tel que détecteur de proximité, et appareil électrique s'y rapportant**
Verfahren zum Einbetten des Innenraumes eines elektrischen Apparates, so wie einen Näherungssensor, in Harz und entsprechender elektrischer Apparat
Method of embedding an electrical apparatus such as a proximity detector in resin and electrical apparatus thus formed

(30) Priorité: 20.03.1991 FR 9103381
(43) Date de publication de la demande: 23.09.1992
(73) Titulaire: TELEMECANIQUE, 92504 Rueil Malmaison Cedex (FR)
(72) Inventeur: Grenet, Gilles, F-16600 Mornac (FR); Ullmann, Catherine, F-69008 Lyon (FR); Pitault, Gérard, F-16600 Ruelle (FR)
(74) Mandataire: Keib, Gérard

(56) Documents cités:
- WO-A-82/01630
- DE-A- 2 041 047
- FR-A- 485 095
- FR-A- 2 302 179
- FR-A- 2 648 745
- GB-A- 2 033 828
- US-A- 4 546 812
- US-A- 4 650 626

## Description

La présente invention concerne un procédé pour noyer dans de la résine les composants situés à l'intérieur du boîtier d'un appareil électrique, tel qu'un détecteur de proximité.

L'invention concerne également un appareil électrique comprenant un boîtier apte à recevoir des composants électriques, en particulier un détecteur de proximité dans lequel une sonde sensible est disposée à une extrémité du boîtier, tandis qu'une extrémité opposée du boitier est destinée à recevoir des moyens de liaison électrique conducteurs isolés pour alimenter le détecteur et transmettre ses signaux de sortie. Lesdits composants sont noyés, à l'intérieur du boîtier, dans une résine isolante durcie qui les immobilise et adhère mécaniquement avec les parois internes du boîter.

L'injection de matière durcissable a pour but de conférer à l'appareil une parfaite fiabilité, résultant d'une insensibilité aux chocs ou vibrations, d'un isolement galvanique des composants, et d'une protection totale contre les agents fluides ou atmosphériques de l'environnement.

Un procédé de remplissage de résine connu d'après le document FR-A-2 648 745 utilise l'effet de centrifugation. Selon ce procédé, on fixe l'appareil électrique en position excentrée sur un rotor de centrifugation en raccordant au boîter de l'appareil un organe d'injection qui présente un conduit de remplissage pour relier le boîter à une zone centrale du rotor, puis on met le rotor en rotation pour faire passer par centrifugation une quantité déterminée de résine fluide de la zone centrale vers l'intérieur du boîter à travers le conduit de remplissage, l'air s'échappant du boîter par des interstices infranchissables par la résine, et on maintien la rotation sensiblement jusqu'à raffermissement de la résine.

La centrifugation de résine donne des résultats satisfaisants, mais on souhaite simplifier et rationaliser sa mise en oeuvre.

L'invention a donc pour but de satisfaire simultanément les impératifs de qualité et de fiabilité concernant les produits obtenus, et les objectifs de simplicité de fabrication et de brièveté de l'opération de remplissage.

Elle vise également la conformation particulière du produit, corrélative à la mise en oeuvre du procédé.

Selon l'invention, pour noyer dans de la résine les composants contenus dans le boîtier d'un appareil électrique :
a) on fixe l'appareil en position excentrée sur un rotor de centrifugation, en raccordant au boîtier de l'appareil un organe d'injection et d'échappement qui présente un conduit de remplissage pour relier le boîtier à une zone centrale du rotor, et un conduit d'échappement pour relier l'intérieur du boîtier à un volume d'échappement,
b) on met le rotor en rotation pour faire passer par centrifugation une quantité déterminée de résine fluide de la zone centrale vers l'intérieur du boîtier à travers le conduit de remplissage, l'air s'échappant du boîtier par le conduit d'échappement et on maintient la rotation sensiblement jusqu'à raffermissement de la résine.

En cours de centrifugation, la résine entre dans le boîtier et va à la partie du boîtier la plus éloignée de l'axe du rotor de centrifugation ; l'air est ainsi refoulé vers l'axe et donc vers le conduit d'échappement de l'injecteur, pour s'échapper sans résistance notable.

L'invention permet ainsi de réaliser le remplissage à une cadence très élevée tout en assurant de manière concomitante un dégazage rapide et efficace.

De préférence, l'organe d'injection et d'échappement est un injecteur unique muni du conduit de remplissage et du conduit d'échappement et introduit dans un orifice unique du boîtier. Cet injecteur unique est avantageusement une pipette sécable. Les conditions opératoires sont de préférence telles que la résine remplit complètement l'intérieur du boîtier et parvient jusqu'au conduit d'échappement.

Suivant un second aspect de l'invention, l'appareil électrique du type indiqué au début est caractérisé en ce qu'un orifice prévu dans le boîtier de l'appareil pour l'introduction de la résine et l'échappement de l'air pendant la fabrication fait apparaître après exécution du procédé une surface visible de résine présentant deux amorces de flux de résine, à savoir une amorce de flux d'alimentation et une amorce de flux de refoulement.

D'autres particularités et avantages de l'invention ressortiront encore de la description ci-après relative à des exemples non limitatifs.

Aux dessins annexés :
- les figures 1 à 3 sont des vues en coupe d'un détecteur de proximité conforme à l'invention au cours de diverses phases du procédé ;
- la figure 4 est une vue en coupe à grande échelle de l'injecteur de la figure 2, avant sa mise en place ;
- les figures 5 et 6 sont des vues analogues à la figure 4, avec arrachements, respectivement après mise en place de l'injecteur sur l'appareil, puis après remplissage de l'appareil en résine ;
- la figure 7 est une vue de dessus d'un détail de l'appareil électrique rempli de résine ;
- les figures 8 et 9 sont des vues en coupe analogues à la figure 1 de deux variantes de détecteurs selon l'invention.

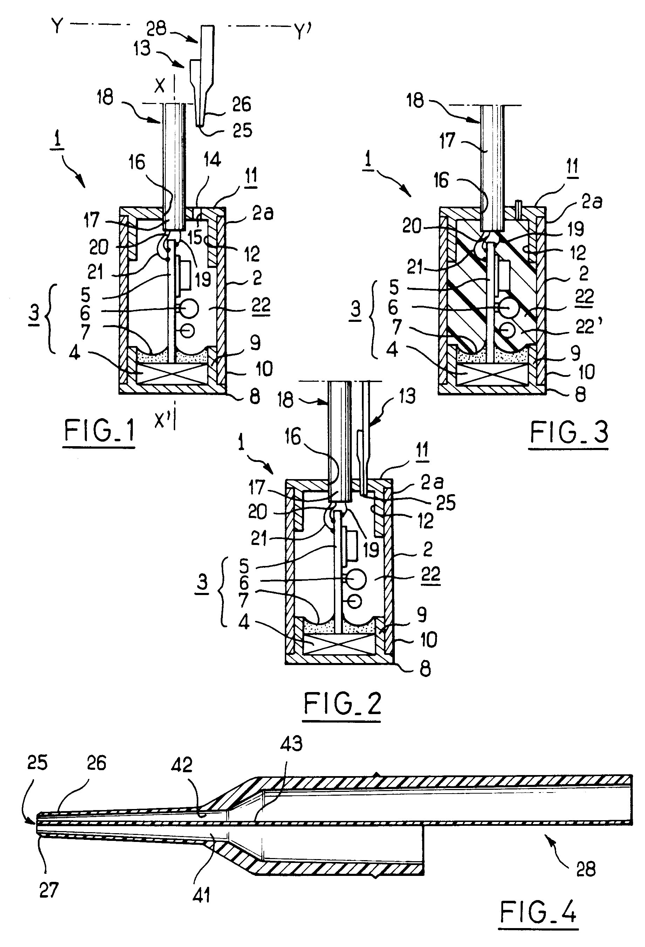

Des appareils électriques concernés par l'invention sont représentés aux figures 1, 8 et 9 dans l'exemple non limitatif de détecteurs de proximité inductifs.

Un premier type de détecteur 1 visible à la figure 1 dans l'état précédant l'introduction de la résine comporte un étui cylindrique 2 d'axe X-X′, un dispositif électronique 3 qui est constitué par un assemblage préalable d'une sonde bobinée 4 avec une carte à circuits imprimés 5 portant des composants 6 ; cet assemblage est ici réalisé à l'aide d'une masse de résine appropriée 7 qui établit également une liaison mécanique des éléments précédents 4, 5 avec une coupelle 8 à jupe 9. La coupelle 8 reçoit la sonde 4 et constitue en même temps par sa paroi avant un opercule de fermeture pour une extrémité 10 de l'étui.

Un bouchon 11 placé à une extrémité opposée 2a de l'étui comporte une jupe interne 12 emboîtée dans l'extrémité 2a de l'étui et un orifice traversant sensiblement cylindrique 14. Le bouchon 11 comporte en outre une ouverture centrale 16 permettant le passage ajusté d'une gaine 17 appartenant à un câble électrique 18.

La jupe du bouchon et celle de la coupelle sont étroitement ajustées avec la surface cylindrique interne de l'étui.

Le câble électrique 18 contient des conducteurs isolés 19, 20, 21 dont les extrémités dénudées sont électriquement reliées à des points appropriés du dispositif 3 dans le boîtier constitué par l'étui 2, la coupelle 8 et le bouchon 11, ce boîtier délimitant un volume interne vide 22.

L'orifice 14 sert d'une part au remplissage du boîtier au moyen d'une résine durcissable 22′ (figure 3) amenée sous pression due à des forces de centrifugation, et d'autre part à l'évacuation simultanée de l'air contenu initialement dans le volume 22. Pour effectuer cette double opération, on insère dans l'orifice 14 une buse 25 d'un injecteur à double conduit 13, en forme de pipette avantageusement en matière plastique, dont on relie une autre extrémité 28 à un moyen d'alimentation en résine (voir figure 4). Lors de cette insertion, la buse 25 à extrémité chanfreinée 27 s'enfonce dans l'orifice 14 jusqu'à ce qu'une surface externe conique 26, à faible convergence, de cette extrémité s'applique de façon étanche contre une surface 15 délimitant l'orifice 14 (voir figure 2).

Pour assurer sa double fonction d'introduction de la résine et de dégazage, l'injecteur comprend deux conduits adjacents 41 et 42 séparés par une mince cloison 43. Le conduit d'alimentation 41 sert au passage de la résine, le conduit d'échappement 42 sert à l'évacuation de l'air, puis au refoulement d'un léger excès de résine. En position opératoire, le conduit 42 est situé au dessus du conduit 41.

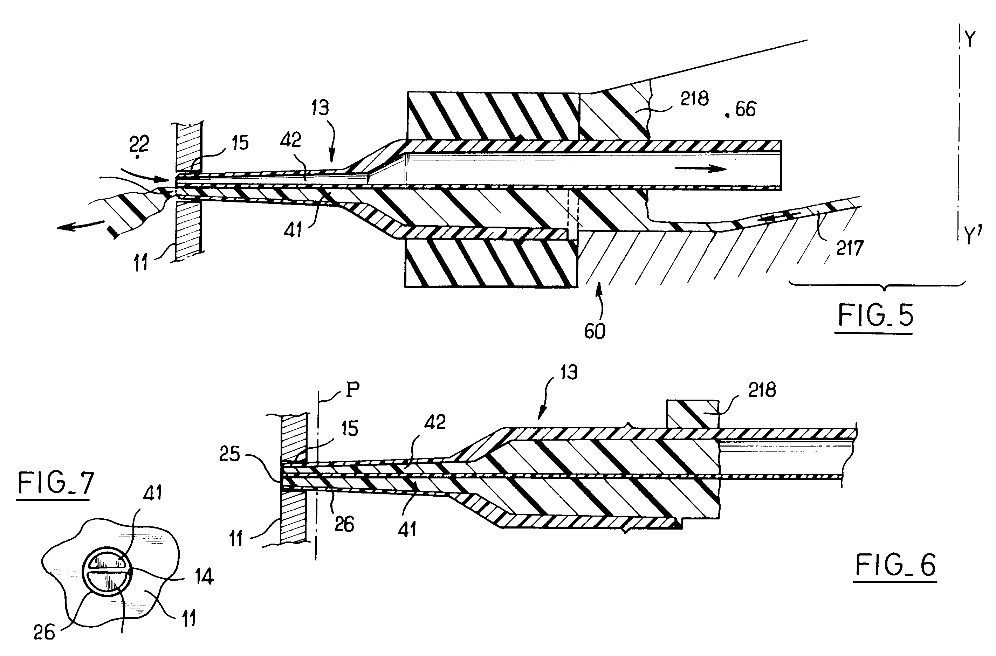

Le détecteur ayant été placé par exemple horizontalement en position excentrée sur un rotor de centrifugation 60 d'axe Y-Y′ (figures 1 et 5) perpendiculaire à X-X′, on met le rotor en rotation tout en admettant dans une zone centrale 66 du rotor une quantité déterminée de résine dans des conditions contrôlées. La résine passe ainsi de la zone centrale 66 du rotor vers l'intérieur du boîtier 11 via le conduit 41 et l'orifice 14. L'air s'échappe par l'orifice 14 et le conduit 42.

Pour cela le conduit 42, plus long que le conduit d'alimentation 41, fait saillie dans la zone centrale 66 du rotor, vers l'axe Y-Y′ du rotor. En cours de centrifugation, la résine 217 introduite dans la zone centrale du rotor vient former une couronne 218 à la périphérie de la zone centrale 66 en passant sous le conduit 41. Le conduit 42 forme dans la chambre 66 une saillie plus grande que la dimension radiale de la couronne 218 de sorte qu'il reste libre de résine pendant que l'air s'échappe dans la région supérieure de la zone 66, qui forme volume d'échappement (figure 5). Quand tout l'air s'est échappé, la résine reflue par le conduit 42 jusqu'à la situation finale représentée à la figure 6, dans laquelle la quantité nécessaire de résine a été entièrement introduite, l'air étant complètement évacué.

Après durcissement de la résine, on sectionne l'extrémité de l'injecteur 13 près de l'orifice 14 selon le plan P. La figure 7 montre l'aspect du détecteur 1, au voisinage de l'orifice 14, avec deux amorces de flux de résine durcie dans les parties sectionnées des conduits 41 et 42 de l'injecteur 13.

On notera qu'un détecteur, lorsqu'il a été rempli de résine conformément à l'invention, présente un aspect caractéristique avec ses deux amorces de flux de résine, dont la présence simultanée constitue un moyen de contrôler que la totalité de l'air du récipient a bien été évacuée et qu'il ne reste pas d'espaces creux accessibles.

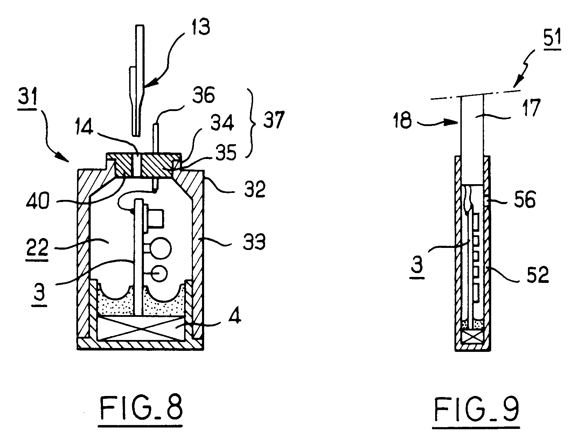

Un deuxième type de détecteur 31 visible à la figure 8 présente une constitution voisine du précédent, sauf en ce qui concerne l'extrémité 32 de l'étui 33 opposée à la sonde 4. Cette extrémité 32 comporte un col 34 dans lequel est engagé un bouchon 35 dont la partie dirigée vers l'extérieur comporte des broches conductrices traversantes telles que 36 isolées mutuellement pour former une embase 37 apte à recevoir un connecteur amovible non représenté.

Dans un troisième type de détecteur 51 visible à la figure 9, l'étui 52 a un diamètre intérieur sensiblement égal au diamètre extérieur de la gaine du câble 18, de telle sorte qu'après insertion du câble 18 dans l'étui 52, l'extrémité correspondante de l'étui est rendue étanche à l'air. A proximité de cette extrémité, on a prévu dans l'étui 52 un trou latéral 56 dont le diamètre correspond à celui de la buse de l'injecteur 13, afin de pouvoir y adapter ce dernier de façon étanche. Lors de la centrifugation, l'axe X-X′ du détecteur peut être placé parallèlement à l'axe du rotor.

L'utilisation d'un champ de forces de centrifugation de plusieurs centaines de fois supérieur à celui de la pesanteur se révèle extrêmement avantageuse pour opérer non seulement une chasse d'air et un remplissage rapide du volume, mais encore pour favoriser l'évacuation des bulles d'air résiduelles qui autrement pourraient se nicher autour de certains composants ; une parfaite adhérence est acquise par ailleurs entre la masse de résine 22′ occupant le volume 22 d'une part, la paroi interne de l'étui, le sous-ensemble préalablement monté 3, la gaine du câble et le bouchon (lorsque celui-ci est présent) d'autre part.

On préfère selon l'invention une résine durcissable éventuellement composite, présentant simultanément de bonnes qualités d'isolement électrique, une faible viscosité, une grande fluidité, un temps de durcissement réduit à température ambiante, un faible coût de revient et une contraction volumique faible pendant la phase de durcissement, et de bonnes propriétés d'adhérence avec le matériau plastique ou métallique du boîtier.

## Revendications

1. Procédé pour noyer dans de la résine les composants contenus dans le boîtier d'un appareil électrique, selon lequel:
a) on fixe l'appareil (1, 31, 51) en position excentrée sur un rotor de centrifugation (60) en raccordant au boîtier de l'appareil un organe d'injection et d'échappement (13) qui présente un conduit de remplissage (41) pour relier le boîtier à une zone centrale (66) du rotor, et un conduit d'échappement (42) pour relier l'intérieur du boîtier à un volume d'échappement (66) ;
b) on met le rotor en rotation pour faire passer par centrifugation une quantité déterminée de résine fluide de la zone centrale (66) vers l'intérieur du boîtier à travers le conduit de remplissage (41), l'air s'échappant du boîtier par le conduit d'échappement (42) et on maintient la rotation sensiblement jusqu'à raffermissement de la résine.

2. Procédé conforme à la revendication 1, caractérisé en ce que l'organe d'injection et d'échappement est un injecteur unique (13) accordé à un orifice unique (14) du boîtier.

3. Procédé conforme à la revendication 2, caractérisé en ce qu'on sectionne l'injecteur (13) près de l'orifice (14) du boîtier après raffermissement de la résine.

4. Procédé conforme à l'une des revendications 1 à 3, caractérisé en ce qu'on fait dépasser le conduit d'échappement (42) vers l'axe de centrifugation à travers la périphérie d'une zone centrale (66) prévue dans le rotor pour alimenter en résine le conduit d'alimentation (41).

5. Appareil électrique comprenant un boîtier apte à recevoir des composants électriques (5, 6), en particulier un détecteur de proximité dans lequel une sonde sensible (4) est disposée à une extrémité du boîtier, tandis qu'une extrémité opposée du boîtier est destinée à recevoir des moyens de liaison électrique isolés (18, 36) pour alimenter le détecteur et transmettre ses signaux de sortie, lesdits composants étant noyés, à l'intérieur du boîtier, dans une résine isolante durcie, caractérisé en ce que le boîtier comporte un orifice (14, 46, 56) qui assure à la fois l'introduction de la résine et l'échappement de l'air pendant la fabrication et qui fait apparaître après la fabrication une surface visible de résine présentant deux amorces de flux de résine.

6. Appareil conforme à la revendication 5, caractérisé en ce que l'orifice fait apparaître également une extrémité sectionnée d'un injecteur (13) d'introduction de la résine et d'évacuation d'air, ladite extrémité présentant deux conduits (41, 22) dans chacun desquels se trouve l'une des amorces de flux de résine.

7. Appareil électrique selon l'une des revendications 5 ou 6 dans lequel le boîtier comprend un étui (2, 33) et un bouchon (11, 35) traversé par des conducteurs (18, 36) et emmanché dans une ouverture de l'étui opposée à la sonde (4), caractérisé en ce que l'orifice (14) est ménagé parallèlement à l'axe (X-X′) de l'étui à travers le bouchon (11, 35).

## Claims

1. Method of embedding in resin components contained in the casing of an electrical device, in which method:
a) the device (1, 31, 51) is fixed eccentrically to a centrifuge rotor (60) and the casing of the device is connected to an injector and extractor unit (13) which has an injector conduit (41) for connecting the casing to a central area (66) of the rotor and an extractor conduit (42) for connecting the interior of the casing to an extraction space (66);
b) the rotor is rotated to centrifuge a determined quantity of fluid resin from the central area (66) towards the interior of the casing through the injector conduit (41), air escaping from the casing through the extractor conduit (42), and rotation is maintained substantially until the resin sets.

2. Method according to claim 1 characterised in that the injector and extractor unit is a single unit (13) adapted to be connected to a single orifice (14) in the casing.

3. Method according to claim 2 characterised in that the unit (13) is cut off near the orifice (14) in the casing after the resin has set.

4. Method according to any one of claims 1 to 3 characterised in that the extractor conduit (42) extends towards the centrifuge axis via the periphery of a central area (66) of the rotor from which resin is fed to the injector conduit (41)

5. Electrical device comprising a casing adapted to receive electrical components (5, 6), for example a proximity detector in which a sensor probe (4) is disposed at one end of the casing while an opposite end of the casing is adapted to receive insulated electrical connection means (18, 36) for energizing the detector and transmitting its output signals, said components being embedded inside the casing in a hardened insulative resin, characterised in that the casing includes an orifice (14, 46, 56) for injecting the resin and extracting the air during fabrication and which after fabrication shows the hardened resin in two resin flow areas.

6. Device according to claim 5 characterised in that the orifice also shows a cut off end of an injector and extractor unit (13) for injecting the resin and extracting the air, said end including two conduits (41, 42) in each of which can be seen the hardened resin in the respective resin flow area.

7. Electrical device according to claim 5 or claim 6 wherein the casing comprises a container (2, 33) and a plug (11, 35) with conductors (18, 36) passing through it inserted into an opening in the container opposite the probe (4) characterised in that the orifice (14) is parallel to the container axis (X-X') and passes through the plug (11, 35).

## Patentansprüche

1. Verfahren um die im Gehäuse eines elektrischen Gerätes enthaltenen Bauteile in Harz einzubetten, laut welchem:
a) das Gerät (1, 31, 51) exzentrisch an einem Zentrifugierrotor (60) befestigt wird, wobei am Gerätegehäuse ein Einspritz- und Austrittsorgan (13) angeschlossen wird, das zwischen dem Gehäuse und einem zentralen Rotorbereich (66) eine Einfülleitung (41), und zwischen dem Innern des Gehäuses und einer Austrittskammer (66) eine Austrittsleitung (42) aufweist
b) der Rotor in Umdrehung versetzt wird, um durch Zentrifugierung eine bestimmte Flüssigharzmenge vom zentralen Bereich (66) durch die Einfülleitung (41) hindurch in das Innere des Gehäuses zu befördern, und Luft durch die Austrittsleitung (42) aus dem Gehäuse abzuführen, wobei die Umdrehung spurbar bis zum Erstarren des Harzes aufrechterhalten wird.

2. Verfahren nach Anspruch 1, dadurch gekennzeichnet, daß das Einspritz- und Austrittsorgan eine einzige Einspritzvorrichtung (13) bildet, welche auf eine einzige Öffnung (14) des Gehäuses paßt.

3. Verfahren nach Anspruch 2, dadurch gekennzeichnet, daß nach dem Erstarren des Harzes die Einspritzvorrichtung (13) in der Nähe der Öffnung (14) des Gehäuses abgeschnitten wird.

4. Verfahren nach einem der Ansprüche 1 bis 3, dadurch gekennzeichnet, daß die Austrittsleitung (42) durch die Peripherie eines für die Harzversorgung der Einfülleitung (41) gedachten zentralen Rotorbereiches (66) hindurch in Richtung auf die Zentrifugierachse hervorsteht.

5. Elektrisches Gerät, bestehend aus einem zur Aufnahme der elektrischen Bauteile (5,6), insbesondere eines Annäherungsdetektors, geeigneten Gehäuse, in welchem an einem Gehäuseende eine empfindliche Sonde (4) angebracht ist, während das gegenüberliegende Gehäuseende isolierte elektrische Anschlußmittel (18, 36) zur Spannungsversorgung des Detektors und Weiterleitung seiner Ausgangssignale aufnehmen soll, wobei besagte Bauteile im Inneren des Gehäuses in erhärtetes Isolierharz eingebettet sind, dadurch gekennzeichnet, daß das Gehäuse eine Öffnung (14, 46, 56) besitzt, welche sowohl für die Harzzufuhr als auch den Luftaustritt während der Herstellung dient, und nach Abschluß des Herstellungsvorganges eine sichtbare Harzoberfläche mit zwei Harzflußansätzen aufzeigt.

6. Gerät nach Anspruch 5, dadurch gekennzeichnet, daß an der Öffnung auch das abgeschnittene Ende einer Einspritzvorrichtung (13) zur Harzzufuhr und zum Luftaustritt sichtbar ist, wobei besagtes Ende zwei Leitungen (41, 22) aufweist, welche je einen Harzflußansatz enthalten.

7. Elektrisches Gerät nach einem der Ansprüche 5 oder 6, in welchem das Gehäuse ein Futteral (2, 33), sowie einen Stopfen (11, 35) umfaßt, durch welchen die Leiter (18, 36) eingeführt werden und welcher in eine Öffnung des Futterals gegenüber der Sonde (4) eingepaßt wird, dadurch gekennzeichnet, daß die Öffnung (14) parallel zur Futteralachse (X-X') durch den Stopfen (11, 35) verläuft.
